# EUROPÄISCHE PATENTSCHRIFT

(11) **EP 2 496 427 B1**
(45) Veröffentlichungstag und Bekanntmachung des Hinweises auf die Patenterteilung: **22.04.2015**
(21) Anmeldenummer: 10766240.5
(22) Anmeldetag: 25.09.2010
(51) Int. Cl.: B60K 13/02, B60H 3/06, B60H 1/00, F02M 35/02

(54) **TRÄGER FÜR TEILE EINES KRAFTFAHRZEUGS SOWIE EINE MIT EINEM SOLCHEN TRÄGER AUSGESTATTETE FRONTEINHEIT**
CARRIER FOR PARTS OF A MOTOR VEHICLE AND A FRONT UNIT EQUIPPED WITH SUCH A CARRIER
SUPPORT POUR DES PIÈCES D'UN VÉHICULE AUTOMOBILE ET UNITÉ FRONTALE MUNIE D'UN TEL SUPPORT

(30) Priorität: 06.11.2009 DE 102009052223
(43) Veröffentlichungstag der Anmeldung: 12.09.2012
(73) Patentinhaber: Volkswagen Aktiengesellschaft, 38440 Wolfsburg (DE)
(72) Erfinder: HEGEL, Carlos, 38471 Rühen (DE); HORN, Pascal, 38116 Braunschweig (DE)
(86) Internationale Anmeldenummer: PCT/EP2010/005874
(87) Internationale Veröffentlichungsnummer: WO 2011/054420

(56) Entgegenhaltungen:
- DE-A1- 10 258 619
- DE-A1-102005 010 161
- DE-T2- 69 402 396
- FR-A1- 2 697 475

## Beschreibung

Die Erfindung betrifft einen mit zumindest einem Hohlraum ausgestatteten Träger für Teile eines Kraftfahrzeugs im Bereich eines Vorderwagens des Kraftfahrzeugs sowie eine mit einem solchen Träger ausgestattete Fronteinheit.

Ein Träger für eine Fronteinheit eines Kraftfahrzeugs ist durch die DE 10 2005 013 107 B3 bekannt. Diese beschreibt einen Träger mit einem Trägerteil zur Verbindung mit einem Fahrgestell des Kraftfahrzeugs und Fassungsteile, die zur Aufnahme einer Scheinwerfereinheit und zur Verbindung mit einem Stoßfänger des Kraftfahrzeugs ausgebildet sind. Bei diesem Träger wird die Montage erleichtert, indem die Fassungsteile mittels elastischer Elemente mit dem ersten Trägerteil verbunden sind.

Es ist weiterhin durch die DE 10 2005 033 659 A1 ein Luftfilter für ein Antriebsaggregat eines Kraftfahrzeugs bekannt, das aus einem freiliegenden, wenigstens einseitig umströmbaren Filterelement besteht. Das Filterelement besteht aus einem Gewebe, aus Papier, Vlies oder einem gleichwertigen Werkstoff. Das Filterelement ist um ein wie ein Korb luftdurchlässig ausgeführtes Segment herumgelegt, sodass sich eine relativ große Filterfläche ergibt. Die seitlichen Bereiche des Segments sind luftundurchlässig ausgeführt und das Segment ist mit einem Träger verbunden, dessen Durchströmbereich luftdurchlässig ist.

Die aus dem Stand der Technik bekannten Träger sind in der Regel quer zur Fahrzeuglängsachse orientiert im Vorderwagen des Kraftfahrzeugs vorgesehen. Die Anströmrichtung des Kraftfahrzeugs ist beim fahrenden Kraftfahrzeug parallel zur Fahrzeuglängsachse.

Das Filter benötigt entsprechend der erforderlichen Filterfläche stets entsprechenden Bauraum im Bereich der Fronteinheit des Kraftfahrzeugs. Die Fronteinheit wird während der Fahrt regelmäßig von der Umgebungsluft angeströmt, welche dem Filter dann als Rohluft zur Verfügung steht. Die heutzutage im Vorderwagen zahlreich verbauten Einrichtungen und Aggregate benötigen sehr viel Bauraum. Hierdurch wird die Unterbringung des Filters erschwert. Ist dann eine Position für das Filter gefunden, so ist aus den genannten Zwängen der Aufwand für die Montage des Filters in der Regel hoch.

Im Dokument FR 2 697 475 A1 wird eine Montagestruktur für Bauteile der Heizung und der Klimatisierung eines Fahrzeugs beschrieben. An der Basis einer Windschutzscheibe ist ein transversaler Hohlraum ausgebildet, welcher die Bauteile aufnimmt, um einen Luftverteiler für die Fahrgastzelle des Fahrzeugs zu versorgen.

Aus dem Dokument DE 102 58 619 A1 geht ein profilierter Querträger an einem vorderen Ende einer Fahrgastzelle eines Kraftfahrzeugs hervor. Zwischen einer Wand zur Fahrgastzelle und einer Stirnwand ist ein Strömungskanal mit einer abdeckbaren Kanalöffnung quer zur Fahrzeugrichtung als fluidische Verbindung zur Fahrzeugumgebung ausgebildet.

Das Dokument DE 10 2005 010 161 A1 zeigt ein Bauteil für einen Träger eines Fahrzeugs mit Luftführungskanälen. In den Träger sind Klimaanlagemodule integriert.

Das Dokument DE 694 02 396 T2 betrifft als nächstliegender Stand der Technik eine Vorderfront eines Fahrzeugs. Eine Baugruppe umfasst einen Tragrahmen und einen Stoßfänger. Der Tragrahmen weist eine Schale auf, welcher der Aufnahme eines Kühlers und einer Luft-Gebläsemotor-Ventilatorgruppe dient. Eine weitere Halbschale bildet mit einer anderen Halbschale einen Hohlraum mit Einlass und Auslass. In diesem Hohlraum ist ein Luftfilter zur Zufuhr von Luft für den Motor angeordnet. Der Stoßfänger weist eine Öffnung für die Ableitung der Zufuhrluft auf.

Vor diesem Hintergrund liegt der Erfindung die Aufgabe zugrunde, den Platzbedarf für Leitungswege der zuzuführenden Rohluft zu reduzieren.

Diese Aufgabe wird gelöst mit einem Träger gemäß den Merkmalen des Patentanspruchs 1 sowie mit einer Fronteinheit für das Kraftfahrzeug gemäß den Merkmalen des Patentanspruchs 8. Die Unteransprüche betreffen besonders zweckmäßige Weiterbildungen der Erfindung.

Erfindungsgemäß ist also ein Träger vorgesehen, der eine Einlassöffnung für die zugeführte Rohluft hat, die durch die Hohlräume des Trägers, die somit zugleich einen Leitungsweg für die Rohluft bilden, insbesondere einem Filterelement zugeführt wird, wobei die Rohluft oder die Reinluft aus der Auslassöffnung austritt. Auf diese Weise kann der erforderliche Platzbedarf wesentlich reduziert werden, weil der Träger zugleich die Funktion der nach dem Stand der Technik separat erforderlichen Leitungen erfüllt. Indem der Leitungsweg im Wesentlichen senkrecht zur Anströmrichtung orientiert angeordnet ist, wird der Platzbedarf reduziert und durch den Fortfall zusätzlicher Leitungselemente zugleich die Fahrzeugmasse gegenüber dem Stand der Technik vermindert. Darüber hinaus gelingt es auch, die Fertigungsdauer zu senken.

Der so geschaffene Leitungsweg kann dazu dienen, die zugeführte Rohluft durch den Hohlraum hindurch der Auslassöffnung zuzuführen, die mit einem separaten Filterraum verbunden ist. Besondere zweckmäßig ist es hingegen, wenn der das Filterelement umschließende Filterraum in dem Leitungsweg der Rohluft oder den Leitungswegen der Rohluft und der Reinluft angeordnet ist. Hierdurch ist es möglich, dass der ansonsten notwendige Filterkasten des Luftfilters durch den im Träger ausgebildeten Filterraum ersetzt wird. Dabei wird nicht nur der Bauraum des Filterkastens, sondern auch dessen Herstellung eingespart, da der Filterraum als Bestandteil des Trägers mit dem Fertigungswerkzeug des Trägers herstellbar ist.

Darüber hinaus eröffnet der erfindungsgemäße Träger die Möglichkeit eines einheitlichen Filters oder Filterraums für alle Motorvarianten, insbesondere da für das im Träger integrierte Filter ein separates Anbindungskonzept entfällt. Der durch den erfindungsgemäßen Träger gegenüber dem Stand der Technik frei werdende Bauraum kann beispielsweise für andere Aggregate, wie beispielsweise die Fahrzeugbatterie, genutzt werden. Vorzugsweise sind der Filterraum und der Leitungsweg für die Rohluft in einem quer im Vorderwagen verlaufenden Obergurt des Trägers integriert. Der Träger hat Einlass- und Auslassöffnungen für die ihn durchströmende Luft. Durch die Einlassöffnungen wird die Luft durch den Hohlraum des Trägers, der so den Leitungsweg bildet, zu dem Filterelement geführt.

Durch die Nutzung weiterer freier Bauräume im Montageträger können im Träger Leitungswege für die Reinluft integriert werden, wobei zumindest Teilabschnitte der Leitungswege für die Reinluft als Luftverteilerelement ausgeführt sein können. Hierdurch ist es zugleich möglich, den knappen Bauraum im Kraftfahrzeug besser auszunutzen und zugleich die Montage der Leitungswege beziehungsweise des Luftverteilerelements zu vereinfachen.

Vorteilhaft ist es, dass der Filterraum zwei Teilräume aufweist, welche durch das in dem Filterraum anordbare Filterelement getrennt sind, wobei der erste Teilraum rohluftseitig und der zweite Teilraum reinluftseitig des Filterelements angeordnet ist. Hierdurch ist es möglich, die effektive Filterfläche bedarfsgerecht einzustellen und zugleich das Filterelement für Montage, Wartung und Austausch leicht zugänglich im Kraftfahrzeug anzuordnen.

Eine vorteilhafte Ausführungsform ist es, dass in dem Filterraum eine Aufnahme für das Filterelement vorgesehen ist. Hierdurch ist es möglich, ein Filterelement mit einfacher, kompakter Geometrie zu verwenden, welches beim Einsetzten in den Filterraum aufgrund der Aufnahmen wie vorgesehen und ohne weiteres Zutun des Monteurs in dem Filterraum positioniert ist und dort gehalten wird. Die Aufnahmen in dem Filterraum können auch, beispielsweise in Form von Füßen oder Abstandshaltern, Bestandteil des Filterelements sein.

Vorteilhaft ist es, dass ein oder mehrere separate Leitungswege für die anzusaugende Rohluft vorgesehen sind, die mittels jeweils zumindest einer Einlassöffnung mit der Umgebungsluft verbunden sind. Hierdurch ist es möglich, dass die Anordnung des Filterraums und der Einlassöffnungen in Abhängigkeit von anderen Zwängen in dem Träger angeordnet werden können. So ist es beispielsweise möglich, den Filterraum mittig in dem Träger und die Einlassöffnungen für den Rohlufteintritt zweiseitig links und rechts von dem Filterraum anzuordnen oder die Zuführung der Rohluft bei einem außermittig im Träger angeordneten Filterraum nur einseitig zu realisieren.

Günstig ist es, dass in dem Träger, insbesondere in einem Bereich um den Filterraum, Materialschwächungen vorgesehen sind. Hierdurch ist es möglich, den Träger im Bereich der Fußgängerschutzfläche auszugestalten und dort beispielsweise den Filterraum anzuordnen. Eine solche Durchdringung der Fußgängerschutzfläche kann durch die als Sollbruchstellen dienenden Materialschwächungen entkräftet werden, sodass im Fall eines Kopfaufschlags der das Filtergehäuse bildende Filterraum abgetrennt wird und nach unten in den Bauraum zwischen Kühler und Motor entweicht. Die im Träger um den Filterraum herum vorgesehenen Materialschwächungen können unter anderem als eine Perforation und/oder verringerte Wandstärke des Trägerwerkstoffs ausgeführt sein.

Für die Langlebigkeit des Filterelements ist es günstig, dass in dem Filterraum ein Wasserablauf vorgesehen ist. Darüber hinaus ist es günstig, dass der Filterraum auf einer Seite von einem mit dem Träger dauerhaft und/oder lösbar verbundenen Deckel abgeschlossen wird. Hierdurch ist es möglich, dass das Filterelement leicht zugänglich ist. Das Einsetzen beziehungsweise die Entnahme des Filters ist entweder durch einen der beiden Teilräume oder quer zur bevorzugten Strömungsrichtung der Luft aus dem Filterraum möglich. Ein dauerhaft mit dem Träger verbundener Deckel kann beispielsweise klappbar auf der Oberfläche des Trägers angeordnet sein. Unterschiedliche Befestigungsmittel wie Schrauben oder Haken erlauben auch eine Ausführung des Deckels, der mit dem Träger lösbar verbunden ist.

Es ist des Weiteren von Vorteil, dass der Träger zum Tragen von Luftführungsleitungen vorbereitet ist. Hierdurch ist es möglich, dass Lasten der Luftführungsleitungen von dem Träger aufgenommen werden und/oder die Luftführungsleitungen schon vormontiert mit dem Träger zur Endmontage geliefert werden. Die Luftführungsleitungen dienen als Verbindungen zwischen Motor und Verteiler beziehungsweise Filter für den Transport der Reinluft.

In einem weiteren Aspekt betrifft die Erfindung eine Fronteinheit für ein Kraftfahrzeug mit einem erfindungsgemäßen Träger, einem hieran befestigten Stoßfänger, mit Scheinwerfereinheiten, einem Kühler und/oder einem Verriegelungselement der Fronthaube.

Die Erfindung lässt zahlreiche Ausführungsformen zu. Zur weiteren Verdeutlichung ihres Grundprinzips sind einige davon in den Zeichnungen dargestellt und werden nachfolgend beschrieben. Diese zeigen in
- Fig. 1: eine Ansicht eines Trägers für eine Fronteinheit eines Kraftfahrzeugs;
- Fig. 2: eine geschnittene Draufsicht auf den Träger in einer ersten Ausführungsform;
- Fig. 3: eine geschnittene Draufsicht auf den Träger in einer zweiten Ausführungsform;
- Fig. 4: einen Querschnitt eines Obergurts des Trägers;
- Fig. 5: eine Ansicht des Träges für einen Kühler eines Kraftfahrzeugs;
- Fig. 6: einen Querschnitt eines Obergurts des Trägers im Bereich einer Einlassöffnung gemäß Schnittebene A aus Figur 5;
- Fig. 7: einen Querschnitt eines Obergurts des Trägers im Bereich eines Leitungswegs gemäß Schnittebene B aus Figur 5;
- Fig. 8: einen Querschnitt eines Obergurts des Trägers im Bereich eines Leitungswegs gemäß Schnittebene C aus Figur 5;
- Fig. 9: einen Querschnitt eines Obergurts des Trägers im Bereich eines Filterelements gemäß Schnittebene D aus Figur 5.

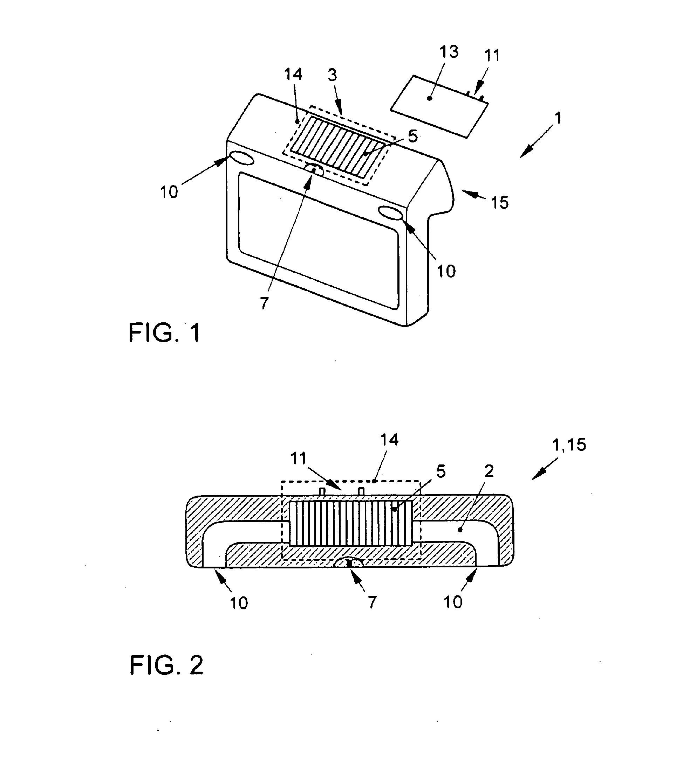

Figur 1 zeigt einen Träger 1 für eine Fronteinheit eines Kraftfahrzeugs. In dem Träger 1 sind in einem Obergurt 15 des Trägers 1 Einlassöffnungen 10 vorgesehen, die dem Eintritt der Rohluft aus der Umgebung in den Träger 1 dienen. Die Einlassöffnungen 10 sind auf der in Fahrtrichtung weisenden Seite des Trägers 1 angeordnet. Horizontal mittig an dem Obergurt 15 ist ein Haubenschloss 7 angeordnet. Bestandteil des Obergurts 15 ist ein Filterraum 3, in dem ein Filterelement 5 positioniert ist. Der Filterraum 3 ist mit einem Deckel 13 verschließbar. An dem Deckel 13 befindet sich an der Auslassöffnung 11 ein Anschlus für Luftführungsleitungen. In einem Bereich 14 ist das Material des Trägers 1 mittels einer Perforation geschwächt, damit im Fall eines Kopfaufschlags auf die Fronthaube der Filterraum 3 abgetrennt wird und nach unten in den Bauraum zwischen Kühler und Motor entweicht.

Figur 2 zeigt eine geschnittene Draufsicht auf den Obergurt 15 des Trägers 1 in einer ersten Ausführungsform, bei welcher der das Filterelement 5 aufnehmende Filterraum horizontal mittig in dem Träger 1 angeordnet ist und die Rohluft über links- und rechtsseitig des Filterraums angeordnete Leitungswege 2 und Einlassöffnungen 10 zu dem Filterelement 5 strömt. Der Träger 1 ist zum Tragen von Luftführungsleitungen vorbereitet und weist an der Auslassöffnung 11 einen Anschluss für Luftführungsleitungen auf.

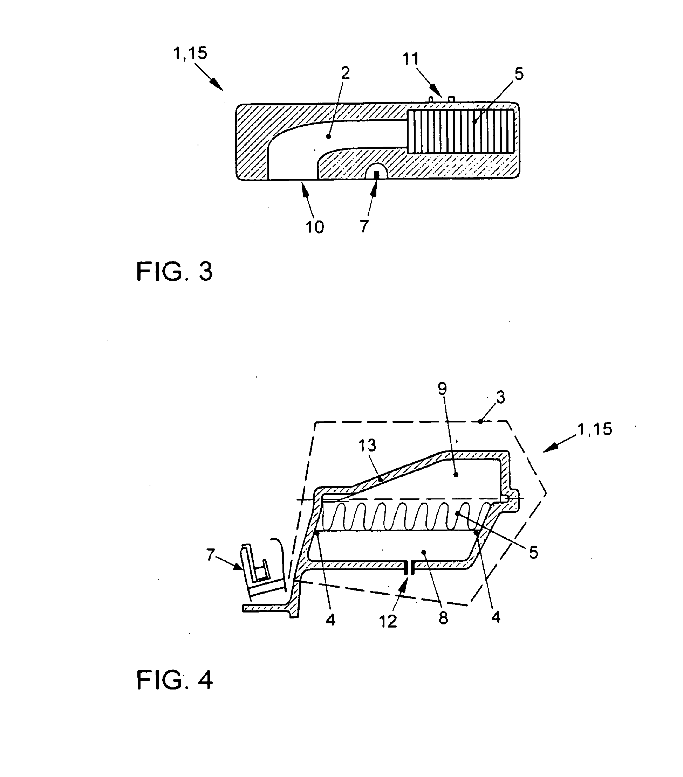

Figur 3 zeigt eine geschnittene Draufsicht auf den Obergurt 15 des Trägers 1 in einer zweiten Ausführungsform, bei welcher der das Filterelement 5 aufnehmende Filterraum 3 horizontal außermittig in dem Träger 1 angeordnet ist und die Rohluft über in Fahrtrichtung rechtsseitig des Filterraums angeordnete Leitungswege 2 und Einlassöffnungen 10 zu dem Filterelement 5 strömt.

Figur 4 zeigt einen Querschnitt durch den Obergurt 15 des Trägers 1 mit dem in Fahrtrichtung vorne angeordneten Haubenschloss 7. Der Schnitt verläuft durch den Filterraum 3, in dem an einer Aufnahme 4 das Filterelement 5 angeordnet ist. Das Filterelement 5 teilt den Filterraum 3 in zwei Teilräume 8, 9. Der erste Teilraum 8 ist über einen Leitungsweg mit einer Einlassöffnung verbunden und dient der Zuführung von Rohluft zum Filterelement 5. Der zweite Teilraum 9 ist über einen Leitungsweg mit einem Anschluss für Luftführungsleitungen verbunden und dient der Fortführung der Reinluft. Im Boden des Filterraums 3 ist ein Wasserablauf 12 vorgesehen.

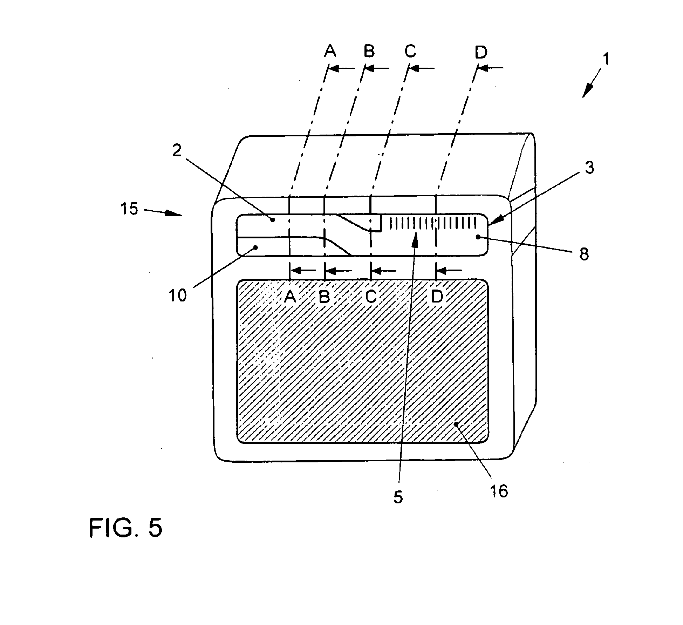

Figur 5 zeigt einen wie in den vorhergehenden Figuren beschriebenen Träger 1 für einen Kühler 16 eines Kraftfahrzeugs mit einem im Obergurt 15 des Träges 1 angeordneten Filterraum 3.

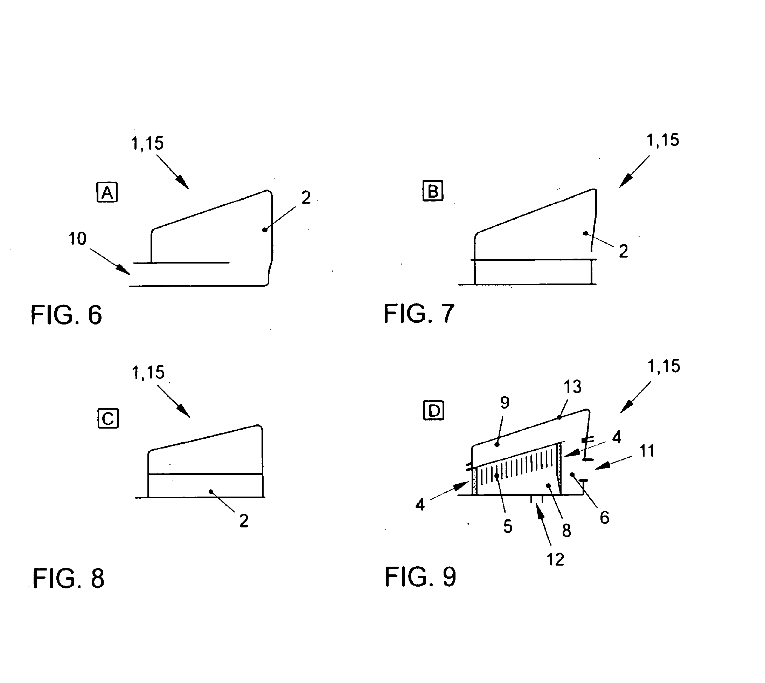

Die Figuren 6, 7, 8 und 9 zeigen Schnitte in den Schnittebenen A, B, C und D aus Figur 5 durch den Obergurt 15 des Trägers 1. Dabei zeigt Figur 6 einen Schnitt in der Schnittebene A im Bereich der Einlassöffnungen 10, Figur 7 einen Schnitt in der Schnittebene B im Bereich des Leitungswegs 2, Figur 8 einen Schnitt in der Schnittebene C im Bereich des Übergangs zwischen Leitungsweg 2 und Filterraum und Figur 9 einen Schnitt in der Schnittebene D durch den Filterraum 3, wie er in Figur 4 beschrieben ist.

## Patentansprüche

1. Ein mit zumindest einem Hohlraum ausgestatteter Träger (1) für die Befestigung von zumindest einem Stoßfänger eines Kraftfahrzeugs im Bereich eines Vorderwagens des Kraftfahrzeugs an dem Träger (1), der zumindest eine Einlassöffnung (10), die in einer in Fahrtrichtung weisenden Seite des Trägers (1) angeordnet ist, und zumindest eine Auslassöffnung (11) hat, bei dem der Hohlraum des Trägers (1) einen Leitungsweg (2) für durch die Einlassöffnung (10) zuführbare Rohluft bildet und in dem Hohlraum ein Filterelement (5) angeordnet ist, **dadurch gekennzeichnet, dass** der Leitungsweg (2) im Wesentlichen senkrecht zur Fahrtrichtung orientiert ist.

2. Träger (1) nach Anspruch 1, **dadurch gekennzeichnet, dass** der Leitungsweg (2) mit einem das Filterelement (5) aufnehmenden Filterraum (3) verbunden ist.

3. Träger (1) nach Anspruch 1, **dadurch gekennzeichnet, dass** der Hohlraum des Trägers (1) zumindest abschnittsweise als Leitungsweg (6) für die Reinluft ausgebildet ist.

4. Träger (1) nach Anspruch 2, **dadurch gekennzeichnet, dass** zumindest Teilabschnitte des Leitungswegs (6) für die Reinluft als Luftverteilerelement ausgeführt sind.

5. Träger (1) nach Anspruch 2, **dadurch gekennzeichnet, dass** der Filterraum (3) zwei Teilräume (8, 9) aufweist, welche durch das in dem Filterraum (3) anordbare Filterelement (5) getrennt sind.

6. Träger (1) nach Anspruch 2, **dadurch gekennzeichnet, dass** der Träger (1) insbesondere in einem Bereich (14) um den Filterraum (3) eine Materialschwächung aufweist.

7. Träger (1) nach Anspruch 2, **dadurch gekennzeichnet, dass** der Filterraum (3) zumindest einseitig einen Deckel (13) aufweist und/oder in dem Filterraum (3) ein Wasserablauf (12) vorgesehen ist.

8. Fronteinheit für ein Kraftfahrzeug mit einem Träger (1) für die Befestigung von einem Stoßfänger, von Scheinwerfereinheiten, von einem Kühler und/oder einem Verriegelungselement einer Fronthaube des Kraftfahrzeugs an dem Träger, **dadurch gekennzeichnet, dass** der Träger (1) ein Träger gemäß einem der vorangehenden Ansprüche ist.

## Claims

1. Carrier (1) provided with at least one cavity for fastening at least one bumper of a motor vehicle in the region of a front end of the motor vehicle to the carrier (1), which has at least one inlet opening (10) which is arranged in a side of the carrier (1) facing in the direction of travel, and at least one outlet opening (11), in which the cavity of the carrier (1) forms a conduction path (2) for untreated air suppliable through the inlet opening (10), and a filter element (5) is arranged in the cavity, **characterized in that** the conduction path (2) is oriented substantially perpendicularly to the direction of travel.

2. Carrier (1) according to Claim 1, **characterized in that** the conduction path (2) is connected to a filter space (3) receiving the filter element (5).

3. Carrier (1) according to Claim 1, **characterized in that** the cavity of the carrier (1) is formed at least in sections as a conduction path (6) for the clean air.

4. Carrier (1) according to Claim 2, **characterized in that** at least partial sections of the conduction path (6) for the clean air are in the form of an air distribution element.

5. Carrier (1) according to Claim 2, **characterized in that** the filter space (3) has two partial spaces (8, 9) which are separated by the filter element (5) which is arrangeable in the filter space (3).

6. Carrier (1) according to Claim 2, **characterized in that** the carrier (1) has a material weakening in particular in a region (14) around the filter space (3).

7. Carrier (1) according to Claim 2, **characterized in that** the filter space (3) has a cover (13) at least on one side, and/or a water outlet (12) is provided in the filter space (3).

8. Front unit for a motor vehicle with a carrier (1) for the fastening of a bumper, of headlight units, of a radiator and/or of a locking element of a bonnet of the motor vehicle to the carrier, **characterized in that** the carrier (1) is a carrier according to one of the preceding claims.

## Revendications

1. Support (1) muni d'au moins une cavité pour la fixation d'au moins un pare-chocs d'un véhicule automobile dans la région de la caisse avant du véhicule automobile sur le support (1), lequel support présente au moins une ouverture d'entrée (10) disposée dans un côté du support (1) tourné dans la direction de conduite, et au moins une ouverture de sortie (11), la cavité du support (1) formant une voie de guidage (2) pour l'air brut pouvant être acheminé à travers l'ouverture d'entrée (10) et un élément de filtre (5) étant disposé dans la cavité, **caractérisé en ce que** la voie de guidage (2) est orientée essentiellement perpendiculairement à la direction de conduite.

2. Support (1) selon la revendication 1, **caractérisé en ce que** la voie de guidage (2) est connectée à un espace de filtre (3) recevant l'élément de filtre (5).

3. Support (1) selon la revendication 1, **caractérisé en ce que** la cavité du support (1) est réalisée au moins en partie sous forme de voie de guidage (6) pour l'air filtré.

4. Support (1) selon la revendication 2, **caractérisé en ce qu'**au moins des sections partielles de la voie de guidage (6) pour l'air filtré sont réalisées sous forme d'élément de distribution d'air.

5. Support (1) selon la revendication 2, **caractérisé en ce que** l'espace de filtre (3) présente deux espaces partiels (8, 9) qui sont séparés par l'élément de filtre (5) pouvant être disposé dans l'espace de filtre (3).

6. Support (1) selon la revendication 2, **caractérisé en ce que** le support (1) présente un affaiblissement de matériau notamment dans une région (14) autour de l'espace de filtre (3).

7. Support (1) selon la revendication 2, **caractérisé en ce que** l'espace de filtre (3) présente au moins d'un côté un couvercle (13) et/ou une sortie d'eau (12) est prévue dans l'espace de filtre (3).

8. Unité frontale pour un véhicule automobile comprenant un support (1) pour la fixation d'un pare-chocs, d'unités de phare, d'un radiateur et/ou d'un élément de verrouillage d'un capot avant du véhicule automobile sur le support, **caractérisée en ce que** le support (1) est un support selon l'une quelconque des revendications précédentes.
